## Europäisches Patentamt

## European Patent Office

## Office européen des brevets

(19)

(11) Veröffentlichungsnummer: **0 106 303**
**B1**

(12) **EUROPÄISCHE PATENTSCHRIFT**

(45) Veröffentlichungstag der Patentschrift:
**19.02.86**

(21) Anmeldenummer: **83110105.0**

(22) Anmeldetag: **11.10.83**

(51) Int. Cl.⁴: **B 60 K 15/02**, B 60 R 25/04

(54) **Kraftstofftank mit Verbrauchssicherung für Kraftfahrzeuge.**

(30) Priorität: **13.10.82 FR 8217124**

(43) Veröffentlichungstag der Anmeldung:
**25.04.84 Patentblatt 84/17**

(45) Bekanntmachung des Hinweises auf die Patenterteilung:
**19.02.86 Patentblatt 86/8**

(84) Benannte Vertragsstaaten:
**DE GB IT**

(56) Entgegenhaltungen:
**FR - A - 541 755**
**FR - A - 1 035 612**
**US - A - 1 526 497**
**US - A - 3 207 203**
**US - A - 4 175 635**

(73) Patentinhaber: **NEIMAN S.A., 39, Avenue Marceau, F-92400 Courbevoie (FR)**

(72) Erfinder: **Lipschütz, Paul, 12, rue Maurice Berteaux, F-78290 Croissy (FR)**

(74) Vertreter: **Patentanwaltsbüro Cohausz & Florack, Postfach 14 01 47, D-4000 Düsseldorf 1 (DE)**

## Beschreibung

Die Erfindung betrifft einen Kraftstofftank mit Diebstahlsicherung für Kraftfahrzeuge, bestehend aus einem Behälter, einem in eine Sicherungsstellung verstellbaren Hahn und einem Stutzen, der mit der Kraftstoffleitung des Fahrzeuges verbunden ist.

Es sind bereits derartige Sicherungsvorrichtungen, insbesondere aus der US-A Nr. 4175635 bekannt, die die Kraftstoffzufuhr zum Motor unterbrechen, entweder durch Einwirkung auf die Zuleitung zwischen Kraftfahrzeugtank und Motor und/oder durch Einwirkung auf die Zündung oder die Kraftstoffpumpe. Diese bekannten Vorrichtungen sind zwar bis zu einem gewissen Grade wirksam, können aber von Unbefugten verhältnismässig leicht ausser Betrieb gesetzt werden. Im Falle der Einwirkung auf die Kraftstoffzuleitung ist es möglich, mit Hilfe eines einfachen Schlauches den Tank direkt mit dem Motor zu verbinden und so die Kraftstoffzufuhr wiederherzustellen. Bei Einwirkung der Sicherungsvorrichtung auf Pumpe oder Zündung kann ein Unbefugter die Pumpe oder die Zündvorrichtung kurzschliessen und sie so wieder in Gang setzen.

Der Erfindung liegt die Aufgabe zugrunde, eine die Kraftstoffzufuhr sperrende Diebstahlsicherung zu schaffen, die mit bekannten und/oder amtlich vorgeschriebenen Sicherungen kombiniert werden kann und praktisch unumgehbar ist. Die Vorrichtung soll überdies das Anlassen des Fahrzeugs und das Fahren einer kurzen Strecke ermöglichen, dann aber das Fahrzeug stoppen.

Erfindungsgemäss wird diese Aufgabe dadurch gelöst, dass der Behälter aus einem Hauptbehälter und einem Nebenbehälter mit geringerem Fassungsvermögen besteht, die durch den Hahn miteinander verbunden sind, und dass der Stutzen ausschliesslich den Nebenbehälter mit der Kraftstoffleitung verbindet.

Die Diebstahlsicherung ist mit normalem Aufwand durch einen Unbefugten nicht ausser Betrieb zu setzen. Auch ist die Vorrichtung von einfacher Konstruktion und durch die Anordnung innerhalb des Tanks gut geschützt und schwer erkennbar. Wenn der Hahn geschlossen ist, was der Sicherstellung entspricht, kann der Motor zwar in Gang gesetzt werden, doch wird die Kraftstoffzufuhr unterbrochen, sobald der Nebenbehälter leer ist, so dass das Fahrzeug sehr rasch zum Stehen kommt, in der Regel mitten im Verkehr, wodurch die Entwendung des Fahrzeugs signalisiert und andere Verkehrsteilnehmer oder die Polizei zum Einschreiten veranlasst werden.

Vorteilhafte Ausgestaltungen der Erfindung sind in den Unteransprüchen enthalten.

Anhand der Zeichnungen wird die Erfindung näher erläutert. Es zeigen:

Fig. 1: eine schematische Schnittansicht eines Tanks gemäss einer Ausführungsform der Erfindung in Betriebsstellung, und

Fig. 2: eine schematische Schnittansicht eines Teils eines Tanks gemäss einer abgeänderten Ausführungsform der Erfindung in Sicherungsstellung.

Der Tank gemäss der Erfindung besteht aus einem Hauptbehälter 1, der einen Nebenbehälter 2 von geringerem Fassungsvermögen enthält. Die Behälter 1 und 2 sind durch eine Öffnung 3 miteinander verbunden, in der ein Hahn 4 angeordnet ist. Der Nebenbehälter 2 ist ausserdem durch einen Stutzen 5 mit der Kraftstoffleitung des Fahrzeugs verbunden.

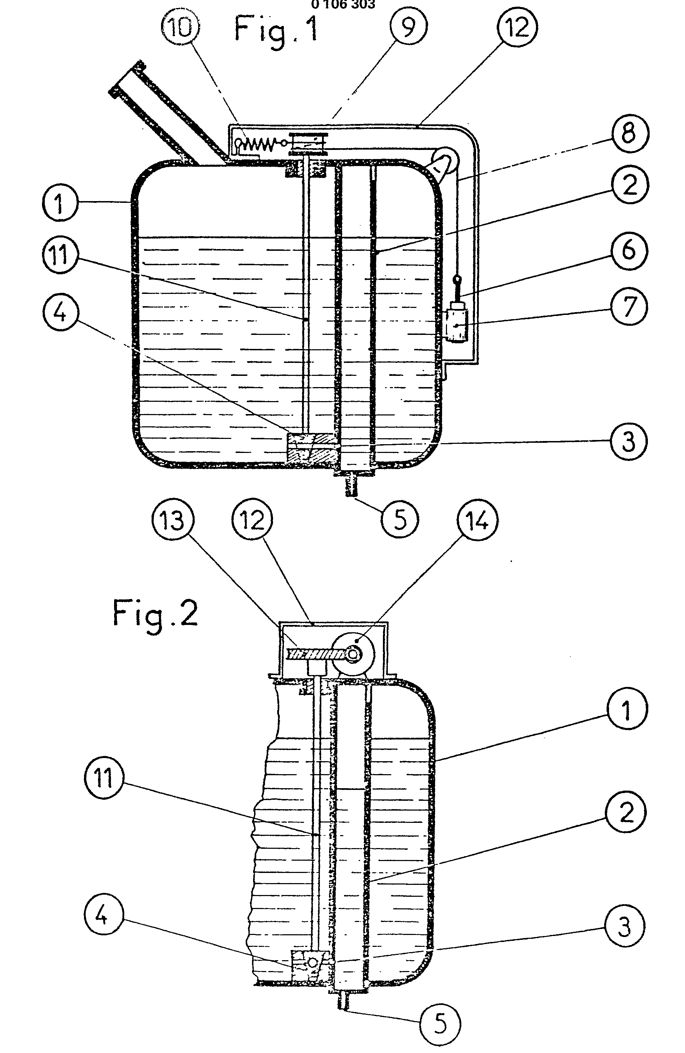

Wenn der Hahn 4 geöffnet ist (Fig. 1), nimmt der Kraftstoff 6 in den Behältern 1 und 2 die gleiche Höhe ein und wird durch den Stutzen 5 dem Motor zugeführt; die nutzbare Kraftstoffmenge entspricht dabei dem Inhalt der beiden Behälter. Befindet sich die Vorrichtung in Sicherungsstellung, das heisst, ist der Hahn 4 geschlossen, so kann nur der in dem Nebenbehälter 2 befindliche Kraftstoff dem Motor durch den Stutzen 5 zugeführt werden. Sobald der Nebenbehälter 2 leer ist, wird die Kraftstoffzufuhr unterbrochen und kann nur durch Öffnen des Hahns 4 wiederhergestellt werden.

Der Hahn 4 kann in verschiedener Weise geöffnet und geschlossen werden. Bei dem in Fig. 1 dargestellten Ausführungsbeispiel ist der Kern 6 eines Elektromagneten 7 mit einem Seil 8 verbunden, das über eine Rolle 9 läuft. An dem freien Ende des Seils 8 greift eine Rückholfeder 10 an. Die Rolle 9 ist durch eine Achse 11 mit dem Drehkörper des Hahns 4 verbunden und bewirkt dadurch je nach dem Zustand des Elektromagneten 7 das Öffnen und Schliessen des Hahns. Das Ganze ist in einem Gehäuse 12 eingeschlossen, das an dem Hauptbehälter 1 befestigt ist, beispielsweise durch Schweissen, so dass der elektromechanische Teil der Vorrichtung unzugänglich ist.

Bei der in Fig. 2 dargestellten abgeänderten Ausführungsform trägt die Achse 11 ein Zahnrad 13, das mit einem Ritzel an der Antriebswelle eines Elektromotors 14 in Eingriff steht. Das Ganze ist ebenfalls in einem Gehäuse 12 eingeschlossen.

Der Hahn 4 kann auch ein Teil einer homogenen Vorrichtung, wie eines Magnetventils, sein. Statt drehbar kann er auch verschiebbar ausgebildet sein.

Die Stromversorgung des Hahns 4, des Elektromagneten 7 oder des Elektromotors 14 kann über eine unabhängige Unterbrechungsvorrichtung, am besten ein Schloss, vorgenommen werden. Bei einer besonders vorteilhaften Ausführungsform wird die Stromversorgung über eine Diebstahlssicherung des Fahrzeugs, eine Lenkradsicherung oder eine Türverriegelung des Fahrzeugs in der Weise vorgenommen, dass eine zusätzliche Manipulation durch den Benutzer nicht erforderlich ist. Die Stromversorgung des elektrischen Antriebsorgans des Hahnes kann durch ein Panzerkabel vorgenommen werden, das ein Kurzschliessen verhindert.

Selbstverständlich kann der Hahn 4 auch mechanisch verstellt werden, beispielsweise mit Hilfe eines mechanischen Schlosses.

## Patentansprüche

1. Kraftstofftank mit Diebstahlsicherung für Kraftfahrzeuge, bestehend aus einem Behälter (1, 2), einem in eine Sicherungsstellung verstellbaren Hahn (4), und einem Stutzen (5), der mit der Kraftstoffleitung des Fahrzeuges verbunden ist, dadurch gekennzeichnet, dass der Behälter (1, 2) aus einem Hauptbehälter (1) und einem Nebenbehälter (2) mit geringerem Fassungsvermögen besteht, die durch den Hahn (4) miteinander verbunden sind, und dass der Stutzen (5) ausschliesslich den Nebenbehälter (2) mit der Kraftstoffleitung verbindet.

2. Kraftstofftank nach Anspruch 1, dadurch gekennzeichnet, dass der Hahn (4) elektrisch verstellbar ist.

3. Kraftstofftank nach Anspruch 2, dadurch gekennzeichnet, dass der Hahn (4) durch einen Elektromagneten (7) verstellbar ist.

4. Kraftstofftank nach Anspruch 2, dadurch gekennzeichnet, dass der Hahn (4) durch einen Elektromotor (14) verstellbar ist.

5. Kraftstofftank nach einem der Ansprüche 1 bis 4, dadurch gekennzeichnet, dass die Antriebsorgane (6, 7, 8, 9, 10-13, 14) des Hahns (4) in einem mit dem Hauptbehälter (1) verbundenen Gehäuse (12) eingeschlossen sind.

6. Kraftstofftank nach Anspruch 1, dadurch gekennzeichnet, dass der Hahn (4) mechanisch verstellbar ist.

7. Kraftstofftank nach Anspruch 6, dadurch gekennzeichnet, dass der Hahn (4) durch ein mechanisches Schloss verstellbar ist.

8. Kraftstofftank nach einem der Ansprüche 1 bis 7, dadurch gekennzeichnet, dass der Nebenbehälter (2) in dem Hauptbehälter (1) enthalten ist.

## Claims

1. Fuel tank with thief-proof device for motor vehicles, consisting of a container (1, 2), a tap (4) adapted for movement into a security position and a connector (5) connected to the fuel line of the vehicle, characterized in that the container (1, 2) consists of a main tank (1) and a subsidiary tank (2) of a smaller capacity, connected to each other by the tap (4) and in that the connector (5) only connects the secondary container (2) to the fuel line.

2. Fuel tank according to Claim 1, characterized in that the tap (4) is electrically adjustable.

3. Fuel tank according to Claim 2, characterized in that the tap (4) can be adjusted by an electromagnet (7).

4. Fuel tank according to Claim 2, characterized in that the tap (4) can be adjusted by an electric motor (14).

5. Fuel tank according to one of Claims 1 to 4, characterized in that the drive members (6, 7, 8, 9, 10-13, 14) of the tap (4) are enclosed in a housing (12) connected to the main tank (1).

6. Fuel tank according to Claim 1, characterized in that the tap (4) is mechanically adjustable.

7. Fuel tank according to Claim 6, characterized in that the tap (4) can be adjusted by a mechanical lock.

8. Fuel tank according to one of Claims 1 to 7, characterized in that the secondary tank (2) is contained in the main tank (1).

## Revendications

1. Réservoir de combustible avec sécurité antivol pour véhicule automobile, comprenant un récipient, un robinet pouvant être amené en position de sécurité, et un conduit qui est relié au circuit de combustible du véhicule automobile, caractérisé par le fait que le récipient (1, 2) est constitué d'un réservoir principal (1) et d'un réservoir secondaire (2) de plus petite capacité qui communiquent l'un avec l'autre par le robinet (4), et le conduit (5) relie le réservoir secondaire (2) seul au circuit d'alimentation.

2. Réservoir selon la revendication 1, caractérisé par le fait que le robinet (4) est réglable électriquement.

3. Réservoir selon la revendication 2, caractérisé par le fait que le robinet (4) est réglable par un électro-aimant (7).

4. Réservoir selon la revendication 2, caractérisé par le fait que le robinet (4) est réglable par un moteur électrique (14).

5. Réservoir selon l'une des revendications 1 à 4, caractérisé par le fait que les organes de commande (6, 7, 8, 9, 10-13, 14) du robinet (4) sont enfermés dans un carter (12) relié au réservoir principal (1).

6. Réservoir selon la revendication 1, caractérisé par le fait que le robinet (4) est réglable mécaniquement.

7. Réservoir selon la revendication 6, caractérisé par le fait que le robinet (4) est réglable par une serrure mécanique.

8. Réservoir selon l'une des revendications 1 à 7, caractérisé par le fait que le réservoir secondaire (2) est contenu dans le réservoir principal (1).

0 106 303

Fig.1

Fig.2

5